# EUROPÄISCHE PATENTSCHRIFT

(11) **EP 1 574 462 B1**
(45) Veröffentlichungstag und Bekanntmachung des Hinweises auf die Patenterteilung: **12.03.2008**
(21) Anmeldenummer: 05005010.3
(22) Anmeldetag: 08.03.2005
(51) Int. Cl.: B65G 65/46

(54) **Dosiervorrichtung**
Dosing device
Dispositif de dosage

(30) Priorität: 12.03.2004 DE 102004012613
(43) Veröffentlichungstag der Anmeldung: 14.09.2005
(73) Patentinhaber: HOSOKAWA ALPINE Aktiengesellschaft, 86199 Augsburg (DE)
(72) Erfinder: Brenner, Bertram, 86199 Augsburg (DE); Herrmann, Friedrich, 74572 Blaufelden (DE)

(56) Entgegenhaltungen:
- DE-C- 645 095
- PATENT ABSTRACTS OF JAPAN Bd. 009, Nr. 300 (M-433), 27. November 1985 (1985-11-27) -& JP 60 137713 A (ICHIEDA SANGYO KK; others: 01), 22. Juli 1985 (1985-07-22)

## Beschreibung

Die Erfindung betrifft eine Dosiervorrichtung nach dem Oberbegriff des Anspruchs 1.

Für die kontinuierliche oder getaktete Dosierung von kleinen Mengen Schüttgütern, speziell feinen Pulvern, kommen Dosiervorrichtungen mit Dosierschnecken zum Einsatz. Sie dienen als Zuführeinrichtungen an prozeßtechnischen Anlage oder als Einrichtung zum Befüllen von Gebinden.

Diese Vorrichtungen bestehen im wesentlichen aus einem Vorratssbehälter, einer oder mehreren Dosierschnecken und wahlweise einem Rührorgan, welches das zu dosierende Material der Förderschnecke zuführt.

Hierbei haben sich zwei Varianten ausgebildet. Zum einen die Schneckendosierer bei denen die Dosierschnecke unterhalb des Vorratsbehälters waagerecht angeordnet ist, hier ist die DE 43 36 685 C2 als Beispiel zu nennen. Zum anderen Dosiervorrichtungen bei denen die Schnecke senkrecht in einem rotationssymmetrischen Dosierbehälter angeordnet ist und konzentrisch von einem Rührer umgeben wird, wie sie in der US 3,269,527 beschrieben ist.

Die JP 60 137713 A beschreibt eine Dosiervorrichtung mit einer Dosierschnecke am Dosierbehälterboden und einem mit Schaufeln besetzten rotierenden Rührer. Dieser befördert das Material in der Dosiervorrichtung zum Austragsrohr und verhindert Materialbrückenbildung.

Die DE 645095 offenbart einen Mischbehälter mit Höhenförderer. Eine Förderschnecke ragt mit ihrem unteren Ende in den Behälter, das Material, hier Mehl fällt durch sein Eigengewicht in den Höhenförderer und wird nach oben transportiert. Der Mischbehälter ist außerdem mit einer Mischvorrichtung, z.B. einer nach oben fördernden Schnecke ausgestattet.

Bei schwer fließfähigen Schüttgütern kommt es bei rotationssymmetrisch ausgestalteten Dosierbehältern mit vertikaler Schnecke und konzentrischem Rührer häufig dazu, daß der Rührer das Material nicht durchmischt und der Schnecke zuführt, sondern das Material im Kreis um die Schnecke bewegt, so daß die Materialzufuhr zur Dosierschnecke und damit die Dosierung unterbrochen ist.

Die konzentrische Anordnung von Schnecke und Rührer erfordert eine aufwendige Lagerung, da sich die eine Welle in der anderen dreht. Besonders aufwendig wird es dann, wenn die Forderung nach möglichst einfacher Demontage von Rührer und Schnecke zu Reinigungszwecken besteht. Bei Pharma-Anwendungen ist ein Ausbau der produktseitigen Wellendichtringen erwünscht, welches bei einer Ausführungsform mit zwei konzentrischen Wellen nur schwer zu realisieren ist.

Aufgabe der Erfindung ist es, eine Dosiervorrichtung zu schaffen, die eine konstante Zufuhr von Material an die Dosierschnecke auch bei schwer fließenden Schüttgütern ermöglicht und die eine einfache Demontage von Rührer und Dosierschnecke zu Reinigungszwecken bietet, insbesondere im Hinblick auf den Ausbau der produktseitigen Wellendichtringe.

Diese Aufgabe wird durch eine Dosiervorrichtung mit den Merkmalen des Anspruchs 1 gelöst. Zweckmäßige Ausgestaltungen und vorteilhafte Weiterbildungen der Erfindung sind in den Unteransprüchen angegeben.

Ein wesentlicher Vorteil der Erfindung besteht darin, das die Schneckenwelle nicht konzentrisch mit dem Rührer im Dosierbehälter angeordnet ist, sondern, exzentrisch möglichst nah an der Wandung des Dosierbehälters. Der Rührer ist konzentrisch zum Dosierbehälter angeordnet, wobei der Rührarm möglichst nah an der Behälterwand geführt wird. Er führt eine oszillierende Bewegung aus. Dadurch wird verhindert, daß schlecht fließfähige Produkte durch den Rührer um die Schnecke im Kreis gedreht werden ohne eine Zufuhr von Material an die Schnecke zu realisieren. Bei der erfindungsgemäßen Ausgestaltung wird das Material vom Rührer zwangsläufig an die Schnecke geführt, von dieser erfaßt und nach unten durch das Dosierrohr transportiert.

Die Ausgestaltung der Vorrichtung mit getrennten Wellen und Lagerungen für Rührer und Schnecke ermöglicht ein einfaches Lösen des Dosierbehälters mit Rührer und Schnecke aus der Lager- und Antriebseinheit. Danach kann der Deckel des Dosierbehälters, der Rührer, die Schnecke und die Wellendichtringe zu Reinigungszwecken ausgebaut werden.

Es besteht die Möglichkeit die Dosiervorrichtung unter einem Neigungswinkel kleiner 90°, vorzugsweise 0 bis 30°, gegenüber der Senkrechten zu betreiben, um auch die Restmengen aus dem Behälter zu dosieren.

Weitere Besonderheiten und Vorzüge der Erfindung ergeben sich aus der folgenden Beschreibung eines Ausführungsbeispiels anhand der Zeichnungen. Es zeigt:
Figur 1: die Dosiervorrichtung
Figur 2: den Dosierbehälter
Figur 3: den Dosierbehälter in einer Schnittansicht

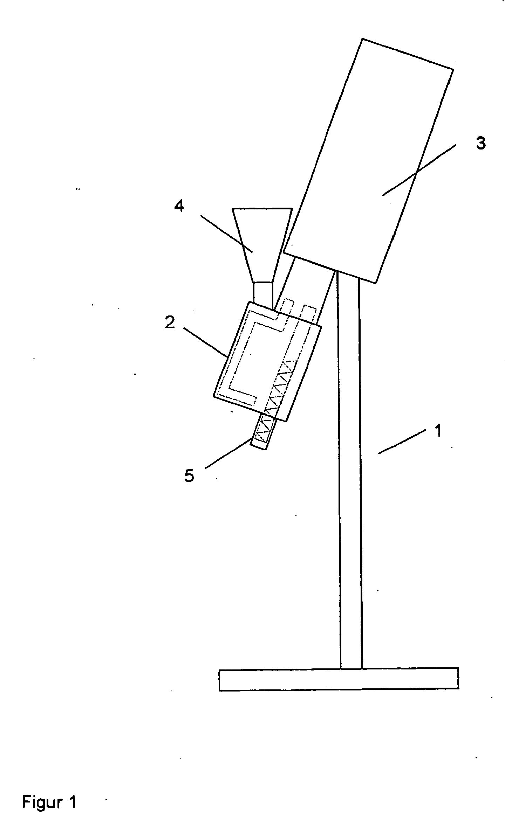

In der Figur 1 ist die Dosiervorrichtung schematisch dargestellt. Die Dosiervorrichtung 1 besteht aus dem Dosierbehälter 2 mit Rührer und Schnecke sowie einer Antriebseinheit 3. Der Dosierbehälter 2 ist mit einem Trichter 4 für die Materialzuführung versehen. Anstatt des Tichters 4 kann auch eine automatische Beschickung z.B. mit horizontaler Förderschnecke eingesetzt werden. Das zugeführte Material wird im Dosierbehälter 2 durch den Rührer zur Schnecke geführt und über das Dosierrohr 5 einer Maschine, einer Anlage oder einem Gebinde zudosiert.

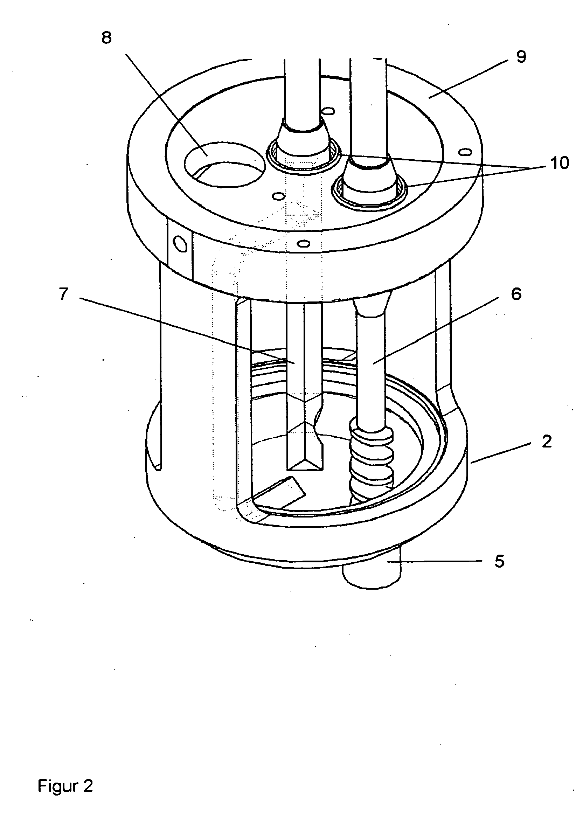

In der Figur 2 ist der Dosierbehälter 2 mit der Anordnung der Dosierschnecke 6 und des Rührer 7 dargestellt. Der Dosierbehälter 2 ist rotationssymmetrisch ausgeführt. Die Schnecke 6 ist exzentrisch parallel zur Rührerachse im Dosierbehälter 2 möglichst nah an der Wandung des Behälters angeordnet. Die Schneckengänge reichen vom Dosierbehälter bis in das Dosierrohr. Der Rührer 7 ist axial mittig im rotationssymmetrischen Dosierbehälter 6 angeordnet. Durch die Wellendichtringe 10 werden die Wellen von Rührer 6 und Schnecke 6 gegenüber dem Deckel und der Umgebung abgedichtet.

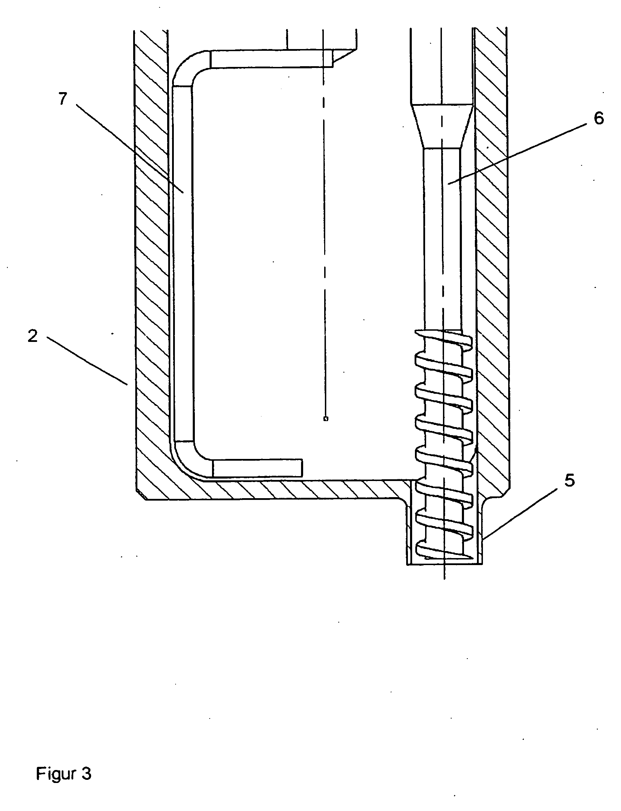

In der Schnittansicht in Figur 3 ist eine Ausführungsform des Rührers 7 dargestellt. Der Rührer 7 hat eine hakenförmige Gestalt, so daß er möglichst wand- und bodennah im Dosierbehälter, welcher zumindest im Bereich des Schneckenauslaufs rotationssymmetrisch gestaltet ist, geführt wird. Der Rührer 7 kann einarmig oder auch mehrarmig ausgeführt sein. Der Rührer 7 führt eine oszillierende Bewegung aus. Dabei bewegt er sich mit einem Arm bis kurz vor die Schnecke 6 und transportiert dabei Material vor sich her um es in die Schnecke zu befördern. Danach dreht er sich dann in die entgegengesetzte Richtung, um sich ebenfalls bis kurz vor die Schnecke zu bewegen und das Material in die Schnecke zu transportieren.

## Patentansprüche

1. Dosiervorrichtung (1) mit einem Dosierbehälter (2) zum Aufnehmen von Schüttgütern, speziell von feinen Pulvern, einer Dosierschnecke (6) und einem Rührer (7) sowie einer Antriebseinheit (3) für Rührer (7) und Dosierschnecke (6) wobei die Dosierschnecke parallel zur Rührachse, exzentrisch im Dosierbehälter (2) angeordnet ist **dadurch gekennzeichnet, dass** der Rührer mit mindestens einem wandnahen und bodennahen Rührarm im Dosierbehälter mit rotationssymmetrischen Auslauf, konzentrisch angeordnet ist und oszillierende Bewegungen ausführt.

2. Dosiervorrichtung nach Anspruch 1, **dadurch gekennzeichnet, daß** der Rührer (7) einarmig oder mehrarmig ausgeführt ist.

3. Dosiervorrichtung nach einem der Ansprüche 1 bis 2 **dadurch gekennzeichnet, daß** die Rührerwelle und Dosierschneckenwelle getrennt gelagert sind.

4. Dosiervorrichtung nach einem der vorherigen Ansprüche **dadurch gekennzeichnet, daß** der Winkel der von dem senkrecht angeordneten Bein der Vorrichtung und der Rührerachse eingeschlossen ist zwischen 0 bis 90° beträgt.

5. Dosiervorrichtung nach einem der vorherigen Ansprüche **dadurch gekennzeichnet, daß** der Winkel der von dem senkrecht angeordneten Bein der Vorrichtung und der Rührerachse eingeschlossen ist zwischen 0 bis 30° beträgt.

## Claims

1. Feed metering unit (1) with a feed metering vessel (2) to accommodate bulk materials - especially fine powders, a feed metering screw (6) and an agitator (7) as well as a drive unit (3) for agitator (7) and feed metering screw (6), whereby the feed metering screw is parallel to the agitator axis and positioned eccentrically in the metering vessel (2), **characterised in that** the agitator with at least one agitator arm routed close to both wall and floor in the metering vessel with axially symmetric discharge is arranged concentrically and performs oscillating movements.

2. Feed metering unit in accordance with Claim 1, **characterised in that** the agitator (7) is in single-arm or multi-arm design.

3. Feed metering unit in accordance with Claim 1 or 2, **characterised in that** agitator shaft and feed metering screw shaft are supported in separate bearings.

4. Feed metering unit in accordance with one of the foregoing claims, **characterised in that** the angle described between the vertical leg of the unit and the agitator axis is between 0 and 90°.

5. Feed metering unit in accordance with one of the foregoing claims, **characterised in that** the angle described between the vertical leg of the unit and the agitator axis is between 0 and 30°.

## Revendications

1. Dispositif de dosage (1) avec un réservoir de dosage (2) pour recevoir des matières en vrac, notamment des poudres fins, une vis sans fin de dosage (6) et un agitateur (7) ainsi qu'une unité motrice (3) pour l'agitateur (7) et la vis sans fin de dosage (6) disposée parallèlement par rapport à l'axe d'agitation et excentriquement dans le réservoir de dosage (2), **caractérisé en ce que** l'agitateur équipé d'au moins un bras agitateur situé près de la paroi et du fond du réservoir de dosage avec une sortie à rotation symétrique, est disposé concentriquement dans le réservoir de dosage et réalise des mouvements oscillants.

2. Dispositif de dosage selon la revendication 1, **caractérisé en ce que** l'agitateur (7) est réalisé avec un bras ou avec plusieurs bras.

3. Dispositif de dosage selon une des revendications 1 à 2, **caractérisé en ce que** l'arbre de l'agitateur et l'arbre de la vis sans fin de dosage sont logés séparément.

4. Dispositif de dosage selon une des revendications précédentes, **caractérisé en ce que** l'angle enfermé par la jambe du dispositif disposée verticalement et l'axe de l'agitateur est de 0 à 90°.

5. Dispositif de dosage selon une des revendications précédentes, **caractérisé en ce que** l'angle enfermé par la jambe du dispositif disposée verticalement et l'axe de l'agitateur est de 0 à 30°.
